# EUROPEAN PATENT APPLICATION

(11) **EP 4 760 421 A1**
(43) Date of publication of application: **17.06.2026**
(21) Application number: 24220080.6
(22) Date of filing: 16.12.2024
(51) Int. Cl.: G05B 13/02, G05B 15/02, H05B 47/175

(54) **SYSTEM AND METHOD FOR COMMISSIONING A BUILDING INFRASTRUCTURE SYSTEM**

(71) Applicant: Tridonic GmbH & Co. KG, 6851 Dornbirn (AT)
(72) Inventor: Schmölzer, Andreas, 6851 Dornbirn (AT); Carracedo Cordovilla, Luis Javier, 6851 Dornbirn (AT)
(74) Representative: Beder, Jens

(57) **Abstract**

A system (10) for commissioning a building infrastructure system (20) is provided. Said system (10) comprises an input interface (11) for inputting information and/or commissioning-associated data with respect to the building infrastructure system (20), and a processing device (12) configured to provide commissioning parameters for the building infrastructure system (20). The processing device (12) is further configured to apply an artificial intelligence or pre-programmed model to the correspondingly inputted information and/or commissioning-associated data to generate said commissioning parameters.

## Description

The invention relates to a system for commissioning a building infrastructure system and a method for commissioning a building infrastructure system.

Generally, in times of building infrastructure or building infrastructure systems, respectively, becoming more and more complex, there is a growing need of a system for commissioning a building infrastructure system and a method for commissioning a building infrastructure system, especially in the sense of a particularly efficient commissioning.

Disadvantageously, in the context of common building infrastructure systems, in the case of commissioning such building infrastructure systems, the corresponding commissioning parameters must be set manually and individually, which is inefficient and expensive.

Accordingly, there is the object to provide a system for commissioning a building infrastructure system and a method for commissioning a building infrastructure system in order to allow for commissioning building infrastructure systems in a particularly efficient manner, especially in the sense of avoiding setting commissioning parameters manually and individually.

This object is solved by the features of the first independent claim for a system for commissioning a building infrastructure system and the features of the second independent claim for a method for commissioning a building infrastructure system. The dependent claims contain further developments.

According to a first aspect of the invention, a system for commissioning a building infrastructure system is provided. Said system comprises an input interface for inputting information and/or commissioning-associated data with respect to the building infrastructure system, and a processing device configured to provide commissioning parameters for the building infrastructure system. The processing device is further configured to apply an artificial intelligence or pre-programmed model to the correspondingly inputted information and/or commissioning-associated data to generate said commissioning parameters.

Advantageously, building infrastructure systems can be commissioned in a particularly efficient manner, especially in the sense of avoiding setting commissioning parameters manually and individually. Further advantageously, the commissioning parameters can be generated offline.

According to an implementation form of the first aspect of the invention, the building infrastructure system comprises or is a building infrastructure management system. Alternatively, the building infrastructure system comprises or is a lighting system, especially a lighting management system.

Advantageously, for instance, a high flexibility can be ensured, thereby increasing efficiency.

According to an implementation form of the first aspect of the invention, the system further comprises an output interface for outputting interaction-associated information, especially in the context of commissioning the building infrastructure system.

Advantageously, for example, information related to commissioning can efficiently be requested from an operator of the system.

According to an implementation form of the first aspect of the invention, the model is trained based on the correspondingly inputted information and/or commissioning-associated data.

Advantageously, for instance, the model can be trained on-the-fly.

According to an implementation form of the first aspect of the invention, the model is trained based on further information and/or commissioning-associated data with respect to another building infrastructure system.

Advantageously, for example, the model can be trained in advance.

According to an implementation form of the first aspect of the invention, the model is trained based on artificially generated information and/or commissioning-associated data, especially wherein said generated information and/or commissioning-associated data is generated with the aid of artificial intelligence. Additionally or alternatively, the model is trained with the aid of artificial intelligence.

Advantageously, for instance, the model can be trained without the need of an existing building infrastructure system.

According to an implementation form of the first aspect of the invention, the input interface comprises or is a chatbot, preferably a chatbot using artificial intelligence and/or machine-learning or a rule-based chatbot.

Advantageously, for example, information can be inputted in a particularly efficient manner.

According to an implementation form of the first aspect of the invention, the output interface comprises or is a chatbot, preferably a chatbot using artificial intelligence and/or machine-learning or a rule-based chatbot, more preferably the chatbot according to the foregoing implementation form.

Advantageously, for instance, information can be outputted in a particularly efficient manner.

According to an implementation form of the first aspect of the invention, the information and/or commissioning-associated data with respect to the building infrastructure system comprises unchangeable parameters and/or changeable parameters with respect to the building infrastructure system and/or with respect to the corresponding building of the building infrastructure system.

Advantageously, for example, the commissioning parameters can be generated in a particularly accurate and suitable manner.

According to an implementation form of the first aspect of the invention, the unchangeable parameters with respect to the building infrastructure system and/or with respect to the corresponding building of the building infrastructure system comprise at least one of geographical location, climate and/or weather conditions, ground conditions, parameters regarding foundation and/or load-bearing structure, height, floor area, parameters regarding connection to infrastructure, parameters regarding energy supply systems, parameters regarding building regulations, parameters regarding zoning specifications, orientation, or any combination thereof.

Advantageously, for instance, accuracy with respect to commissioning parameter generation can further be increased.

According to an implementation form of the first aspect of the invention, the changeable parameters with respect to the building infrastructure system and/or with respect to the corresponding building of the building infrastructure system comprise at least one of parameters regarding room layout, parameters regarding furnishing, parameters regarding flooring and/or surfaces, planned building usage, expected number of people in a room and/or in an area, parameters regarding heating and/or ventilation and/or air conditioning systems, parameters regarding lighting, parameters regarding control systems, parameters regarding sun shading systems, parameters regarding energy management, parameters regarding parking lots, parameters regarding alarm systems, parameters regarding fire protection systems, parameters regarding communication systems, or any combination thereof.

Advantageously, for example, flexibility with respect to commissioning parameter generation can further be increased.

According to an implementation form of the first aspect of the invention, the processing device is further configured to determine a probability of a corresponding correctness of the correspondingly provided commissioning parameters. The processing device is further configured to apply said commissioning parameters to the building infrastructure system, especially via a commissioning interface of the system and/or of the building infrastructure system, if said probability exceeds a certain threshold.

Advantageously, for instance, errors and malfunction can reliably be prevented. Further advantageously, the building infrastructure system can be commissioned in an automated manner.

According to an implementation form of the first aspect of the invention, the building infrastructure system comprises at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

Advantageously, for example, a particularly high flexibility can be ensured, thereby increasing efficiency.

According to an implementation form of the first aspect of the invention, the artificial intelligence model comprises or is a machine-learned model or a model based on a neural network, especially based on an artificial neural network.

Advantageously, for instance, efficiency can further be increased.

According to a second aspect of the invention, a method for commissioning a building infrastructure system is provided. Said method comprises the steps of inputting information and/or commissioning-associated data with respect to the building infrastructure system, providing commissioning parameters for the building infrastructure system, and applying an artificial intelligence or pre-programmed model to the correspondingly inputted information and/or commissioning-associated data to generate said commissioning parameters.

Advantageously, building infrastructure systems can be commissioned in a particularly efficient manner, especially in the sense of avoiding setting commissioning parameters manually and individually. Further advantageously, the commissioning parameters can be generated offline.

According to an implementation form of the second aspect of the invention, the building infrastructure system comprises or is a building infrastructure management system. Alternatively, the building infrastructure system comprises or is a lighting system, especially a lighting management system.

Advantageously, for instance, a high flexibility can be ensured, thereby increasing efficiency.

According to an implementation form of the second aspect of the invention, the method further comprises the step of outputting interaction-associated information, especially in the context of commissioning the building infrastructure system.

Advantageously, for example, information related to commissioning can efficiently be requested from an operator of the system.

According to an implementation form of the second aspect of the invention, the model is trained based on the correspondingly inputted information and/or commissioning-associated data.

Advantageously, for instance, the model can be trained on-the-fly.

According to an implementation form of the second aspect of the invention, the model is trained based on further information and/or commissioning-associated data with respect to another building infrastructure system.

Advantageously, for example, the model can be trained in advance.

According to an implementation form of the second aspect of the invention, the model is trained based on artificially generated information and/or commissioning-associated data, especially wherein said generated information and/or commissioning-associated data is generated with the aid of artificial intelligence. Additionally or alternatively, the model is trained with the aid of artificial intelligence.

Advantageously, for instance, the model can be trained without the need of an existing building infrastructure system.

According to an implementation form of the second aspect of the invention, the step of inputting the information and/or commissioning-associated data with respect to the building infrastructure system is performed with the aid of an input interface, especially comprising or being a chatbot, preferably a chatbot using artificial intelligence and/or machine-learning or a rule-based chatbot.

Advantageously, for example, information can be inputted in a particularly efficient manner.

According to an implementation form of the second aspect of the invention, the step of outputting the interaction-associated information is performed with the aid of an output interface, especially comprising or being a chatbot, preferably a chatbot using artificial intelligence and/or machine-learning or a rule-based chatbot, more preferably the chatbot according to the foregoing implementation form.

Advantageously, for instance, information can be outputted in a particularly efficient manner.

According to an implementation form of the second aspect of the invention, the information and/or commissioning-associated data with respect to the building infrastructure system comprises unchangeable parameters and/or changeable parameters with respect to the building infrastructure system and/or with respect to the corresponding building of the building infrastructure system.

Advantageously, for example, the commissioning parameters can be generated in a particularly accurate and suitable manner.

According to an implementation form of the second aspect of the invention, the unchangeable parameters with respect to the building infrastructure system and/or with respect to the corresponding building of the building infrastructure system comprise at least one of geographical location, climate and/or weather conditions, ground conditions, parameters regarding foundation and/or load-bearing structure, height, floor area, parameters regarding connection to infrastructure, parameters regarding energy supply systems, parameters regarding building regulations, parameters regarding zoning specifications, orientation, or any combination thereof.

Advantageously, for instance, accuracy with respect to commissioning parameter generation can further be increased.

According to an implementation form of the second aspect of the invention, the changeable parameters with respect to the building infrastructure system and/or with respect to the corresponding building of the building infrastructure system comprise at least one of parameters regarding room layout, parameters regarding furnishing, parameters regarding flooring and/or surfaces, planned building usage, expected number of people in a room and/or in an area, parameters regarding heating and/or ventilation and/or air conditioning systems, parameters regarding lighting, parameters regarding control systems, parameters regarding sun shading systems, parameters regarding energy management, parameters regarding parking lots, parameters regarding alarm systems, parameters regarding fire protection systems, parameters regarding communication systems, or any combination thereof.

Advantageously, for example, flexibility with respect to commissioning parameter generation can further be increased.

According to an implementation form of the second aspect of the invention, the method further comprises the step of determining a probability of a corresponding correctness of the correspondingly provided commissioning parameters. The method further comprises the step of applying said commissioning parameters to the building infrastructure system, especially via a commissioning interface preferably of the building infrastructure system, if said probability exceeds a certain threshold.

Advantageously, for instance, errors and malfunction can reliably be prevented. Further advantageously, the building infrastructure system can be commissioned in an automated manner.

According to an implementation form of the second aspect of the invention, the building infrastructure system comprises at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

Advantageously, for example, a particularly high flexibility can be ensured, thereby increasing efficiency.

According to an implementation form of the second aspect of the invention, the artificial intelligence model comprises or is a machine-learned model or a model based on a neural network, especially based on an artificial neural network.

Advantageously, for instance, efficiency can further be increased.

Exemplary embodiments of the invention are now further explained with respect to the drawings by way of example only, and not for limitation. In the drawings:
- Fig. 1: shows an exemplary embodiment of a system for commissioning a building infrastructure system; and
- Fig. 2: shows a flow chart of an exemplary embodiment of a method for commissioning a building infrastructure system.

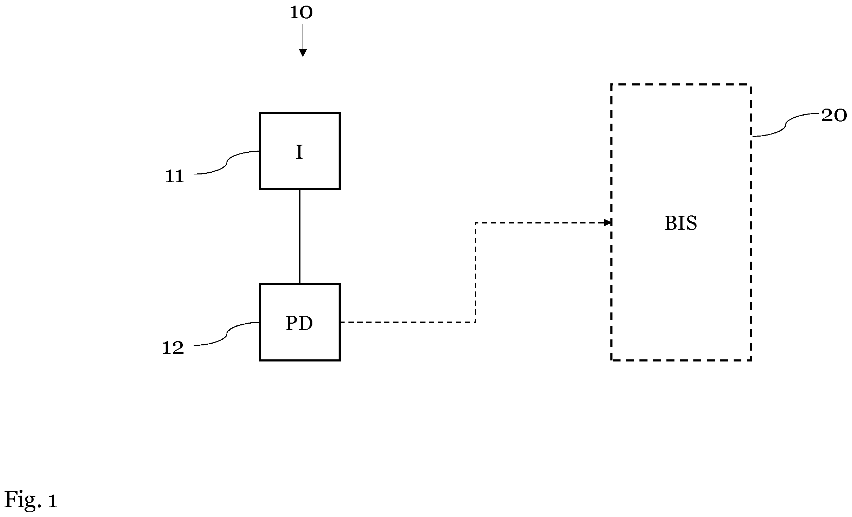

Fig. 1 illustrates an exemplary embodiment of a system 10 for commissioning a building infrastructure system 20. Said system 10 comprises an interface 11, exemplarily an input interface, for inputting information and/or commissioning-associated data with respect to the building infrastructure system 20, and a processing device 12 configured to provide commissioning parameters for the building infrastructure system 20. In this context, the processing device 12 is further configured to apply an artificial intelligence or pre-programmed model to the correspondingly inputted information and/or commissioning-associated data to generate said commissioning parameters.

Advantageously, the interface 11 can be used to query information about the corresponding project or the building infrastructure system 20, respectively, such as boundary conditions of the building infrastructure system 20. Further advantageously, the processing device 12 can be used to determine variables that can be used when selecting the parameters to be set for the building infrastructure system 20 or for its devices, respectively, in the context of commissioning.

With respect to the commissioning-associated data, it is noted that said commissioning-associated data can comprise configuration-associated data with respect to the building infrastructure system 20. By analogy, with respect to the commissioning parameters, it is noted that said commissioning parameters can comprise configuration parameters.

With respect to the building infrastructure system 20, it is noted that the building infrastructure system 20 can comprise or be a building infrastructure management system. For instance, the building infrastructure system 20 or the building infrastructure management system, respectively, can comprise multiple building infrastructure devices. Accordingly, the correspondingly inputted information and/or commissioning-associated data can be inputted information and/or commissioning-associated data with respect to at least a part or each of the multiple building infrastructure devices.

Especially as an alternative, the building infrastructure system 20 can comprise or be a lighting system, especially a lighting management system. For example, the lighting system or the lighting management system, respectively, can comprise multiple lighting-associated devices. Accordingly, the correspondingly inputted information and/or commissioning-associated data can be inputted information and/or commissioning-associated data with respect to at least a part or each of the multiple lighting-associated devices.

It is noted that it might be particularly advantageous if the system 10 further comprises an output interface for outputting interaction-associated information, especially in the context of commissioning the building infrastructure system 20. It is possible that the interface 11 provides such output capabilities. In other words, in addition to inputting the information and/or commissioning-associated data with respect to the building infrastructure system 20, the interface 11 can be configured for outputting interaction-associated information, especially in the context of commissioning the building infrastructure system 20. Accordingly, in this case, the interface 11, exemplarily the input interface, may especially be understood as an input and output interface, preferably for inputting the information and/or commissioning-associated data with respect to the building infrastructure system 20 and for outputting interaction-associated information, especially in the context of commissioning the building infrastructure system 20.

With respect to the model, it is noted that it might be particularly advantageous if the model is trained based on the correspondingly inputted information and/or commissioning-associated data.

Furthermore, it might be particularly advantageous if the model is trained based on further information and/or commissioning-associated data with respect to another building infrastructure system.

For instance, the processing device 12 can be configured to access a database based on historical data or planning data so that it is able to derive or select the correct commissioning information from this database based on the model. Specifically, the model can be first trained by generating training data on the basis of historical data or current project data (other projects) so that the model is ultimately able to create information for commissioning the building infrastructure system 20 or its devices, respectively, using information that is transferred for the specific application, e.g. by an operator of the system 10.

With respect to the model, it is further noted that the model can be hosted in a cloud or cloud storage or remote storage. The model can be trained with commissioning information from a plurality of projects done to date, especially within a group. Said projects or building infrastructure systems, respectively, can be categorized at least by location, application, size, or any combination thereof. The model can be trained on corresponding actual capabilities of the respective devices of the building infrastructure system 20.

Moreover, it might be particularly advantageous if the model is trained based on artificially generated information and/or commissioning-associated data, especially wherein said generated information and/or commissioning-associated data is generated with the aid of artificial intelligence. In addition to this or as an alternative, it might be particularly advantageous if the model is trained with the aid of artificial intelligence.

With respect to the interface 11, exemplarily being an input interface or an input and output interface, it is noted that it might be particularly advantageous if said interface 11 or the input interface or the input and output interface, respectively, comprises or is a chatbot, preferably a chatbot using artificial intelligence and/or machine-learning or a rule-based chatbot.

For instance, especially once the model has been trained accordingly, the chatbot can be used to make an interactive query to an operator of the system 10 so that the corresponding information can be entered by the operator in response to a prompt from the chatbot. In this exemplary way, a collection of information can be generated sequentially by repeated queries from the chatbot, which describes the building infrastructure system 20 that is not yet commissioned and on the basis of which a set of commissioning data record can then be generated using the model.

For example, the queries carried out by the chatbot can basically concern two types of parameters that might be essential for determining the commissioning parameters: On the one hand, these are unchangeable parameters of the building infrastructure system 20, for example parameters of the building, such as location of the building, orientation, etc., and on the other hand, changeable parameters, such as the planned use of the building, the expected number of people in the individual areas (conference room, corridor, waiting area in front of the elevator, bar area, room), etc.

Accordingly, it might be particularly advantageous if the information and/or commissioning-associated data with respect to the building infrastructure system 20 comprises unchangeable parameters and/or changeable parameters with respect to the building infrastructure system 20 and/or with respect to the corresponding building of the building infrastructure system 20.

In this context, it might be particularly advantageous if the unchangeable parameters with respect to the building infrastructure system 20 and/or with respect to the corresponding building of the building infrastructure system 20 comprise at least one of geographical location, climate and/or weather conditions, ground conditions, parameters regarding foundation and/or load-bearing structure, height, floor area, parameters regarding connection to infrastructure, parameters regarding energy supply systems, parameters regarding building regulations, parameters regarding zoning specifications, orientation, or any combination thereof.

Furthermore, it might be particularly advantageous if the changeable parameters with respect to the building infrastructure system 20 and/or with respect to the corresponding building of the building infrastructure system 20 comprise at least one of parameters regarding room layout, parameters regarding furnishing, parameters regarding flooring and/or surfaces, planned building usage, expected number of people in a room and/or in an area, parameters regarding heating and/or ventilation and/or air conditioning systems, parameters regarding lighting, parameters regarding control systems, parameters regarding sun shading systems, parameters regarding energy management, parameters regarding parking lots, parameters regarding alarm systems, parameters regarding fire protection systems, parameters regarding communication systems, or any combination thereof.

With respect to the processing device 12, it is noted that it might be particularly advantageous if the processing device 12 is further configured to determine a probability of a corresponding correctness of the correspondingly provided commissioning parameters. In addition to this, it might be particularly advantageous if the processing device 12 is further configured to apply said commissioning parameters to the building infrastructure system 20, especially via a commissioning interface of the system 10 and/or of the building infrastructure system 20, if said probability exceeds a certain threshold. As indicated, it might be particularly advantageous if the system 10 comprises a commissioning interface, especially an output commissioning interface, and/or the building infrastructure system 20 comprises a commissioning interface, especially an input commissioning interface.

For instance, for a set of commissioning parameters, it is possible to determine how likely it is that the determined result is correct, especially in the form of a confidence level. If the probability that the generated commissioning parameters are correct is high enough, the building infrastructure system 20 can be commissioned on this basis. For this purpose, the generated commissioning parameters can be transferred to the building infrastructure system 20 or a corresponding application controller, respectively. An operator of the system 10 may then identify the corresponding individual building infrastructure devices in the respective rooms. The transfer of the commissioning parameters may be carried out or triggered by the interface 11 or the chatbot, respectively, or the system 10 or the processing device 12 to the building infrastructure system 20.

Further exemplarily, the interface 11 or the chatbot, respectively, can be configured to accept instructions in natural language, especially describing the project or building infrastructure system 20, respectively, that needs to be commissioned. Furthermore, the processing device 12 can be configured to generate a matching commissioning set of rules sent to the building infrastructure system 20, especially via corresponding APIs (application programmable interfaces), preferably without human intervention.

With respect to the building infrastructure system 20 or the system 10, respectively, it is noted that it might be particularly advantageous if the system 10 is independent of the building infrastructure system 20 to be commissioned. This may especially mean that the commissioning parameters are generated offline (i.e. without the intervention of the building infrastructure system 20) using the system 10 and then transferred to the building infrastructure system 20 via a corresponding interface.

For instance, for this purpose of such an offline commissioning parameters generation, the corresponding data that specifically describes the building infrastructure system 20 or the correspondingly inputted information and/or commissioning-associated data, respectively, for the use case would have to be uploaded offline so that it can be used by the system 10. Alternatively, it could also be possible for this data to be retrieved directly from the building infrastructure system 20 via an interface by the system 10, in which case, however, genuine offline generation of the data would no longer be possible.

Accordingly, it might be particularly advantageous if the interface 11 or the input interface, respectively, is configured to retrieve the information and/or commissioning-associated data with respect to the building infrastructure system 20 from the building infrastructure system 20, especially in a direct manner.

With respect to the building infrastructure system 20, it is further noted that the building infrastructure system 20 can exemplarily comprise at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

With respect to model or the artificial intelligence model, respectively, it is noted that it might be particularly advantageous if the artificial intelligence model comprises or is a machine-learned model or a model based on a neural network, especially based on an artificial neural network.

Furthermore, it might be particularly advantageous if the model is trained in a manner that actions of the building infrastructure system 20 that would go against the safety of the building inhabitants are not allowed. Moreover, it might be particularly advantageous if the model is trained in a manner that legislations that apply to the building infrastructure system 20, especially at the corresponding location, are complied with.

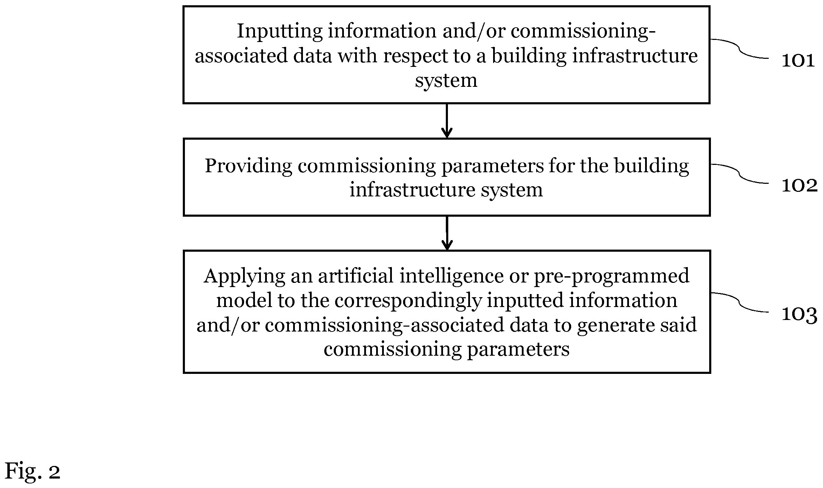

Finally, Fig. 2 illustrates a flow chart of an exemplary embodiment of a method for commissioning a building infrastructure system, such as the building infrastructure system 20 according to Fig. 1.

A first step 101 comprises inputting information and/or commissioning-associated data with respect to the building infrastructure system. A second step 102 comprises providing commissioning parameters for the building infrastructure system. A third step 103 comprises applying an artificial intelligence or pre-programmed model to the correspondingly inputted information and/or commissioning-associated data to generate said commissioning parameters.

It is noted that said method for commissioning a building infrastructure system can especially be a method for commissioning a building infrastructure system, using a system for commissioning a building infrastructure system, such as the system 10 according to Fig. 1.

Accordingly, it is further noted that step 101 may especially be performed with the aid of an interface or an input interface, respectively, such as the interface 11 according to Fig. 1. Additionally or alternatively, step 102 and/or step 103 may especially be performed with the aid of a processing device, such as the processing device 12 according to Fig. 1.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. System (10) for commissioning a building infrastructure system (20), comprising:
an input interface (11) for inputting information and/or commissioning-associated data with respect to the building infrastructure system (20), and
a processing device (12) configured to generate commissioning parameters for the building infrastructure system (20),
wherein the processing device (12) is further configured to apply an artificial intelligence or pre-programmed model to the correspondingly inputted information and/or commissioning-associated data to generate said commissioning parameters.

2. The system (10) according to claim 1,
wherein the building infrastructure system (20) comprises or is a building infrastructure management system, or
wherein the building infrastructure system (20) comprises or is a lighting system, especially a lighting management system.

3. The system (10) according to claim 1 or 2,
wherein the system (10) further comprises an output interface for outputting interaction-associated information, especially in the context of commissioning the building infrastructure system (20).

4. The system (10) according to any of the claims 1 to 3,
wherein the model is trained based on the correspondingly inputted information and/or commissioning-associated data.

5. The system (10) according to any of the claims 1 to 4,
wherein the model is trained based on further information and/or commissioning-associated data with respect to another building infrastructure system.

6. The system (10) according to any of the claims 1 to 5,
wherein the model is trained based on artificially generated information and/or
commissioning-associated data, especially wherein said generated information and/or
commissioning-associated data is generated with the aid of artificial intelligence, and/or
wherein the model is trained with the aid of artificial intelligence.

7. The system (10) according to any of the claims 1 to 6,
wherein the input interface (11) comprises or is a chatbot, preferably a chatbot using artificial intelligence and/or machine-learning or a rule-based chatbot.

8. The system (10) according to any of the claims 3 to 7,
wherein the output interface comprises or is a chatbot, preferably a chatbot using artificial intelligence and/or machine-learning or a rule-based chatbot, more preferably the chatbot according to claim 7.

9. The system (10) according to any of the claims 1 to 8,
wherein the information and/or commissioning-associated data with respect to the building infrastructure system (20) comprises unchangeable parameters and/or changeable parameters with respect to the building infrastructure system (20) and/or with respect to the corresponding building of the building infrastructure system (20).

10. The system (10) according to claim 9,
wherein the unchangeable parameters with respect to the building infrastructure system (20) and/or with respect to the corresponding building of the building infrastructure system (20) comprise at least one of geographical location, climate and/or weather conditions, ground conditions, parameters regarding foundation and/or load-bearing structure, height, floor area, parameters regarding connection to infrastructure, parameters regarding energy supply systems, parameters regarding building regulations, parameters regarding zoning specifications, orientation, or any combination thereof.

11. The system (10) according to claim 9 or 10,
wherein the changeable parameters with respect to the building infrastructure system (20) and/or with respect to the corresponding building of the building infrastructure system (20) comprise at least one of parameters regarding room layout, parameters regarding furnishing, parameters regarding flooring and/or surfaces, planned building usage, expected number of people in a room and/or in an area, parameters regarding heating and/or ventilation and/or air conditioning systems, parameters regarding lighting, parameters regarding control systems, parameters regarding sun shading systems, parameters regarding energy management, parameters regarding parking lots, parameters regarding alarm systems, parameters regarding fire protection systems, parameters regarding communication systems, or any combination thereof.

12. The system (10) according to any of the claims 1 to 11,
wherein the processing device (12) is further configured to determine a probability of a corresponding correctness of the correspondingly provided commissioning parameters, and
wherein the processing device (12) is further configured to apply said commissioning parameters to the building infrastructure system (20), especially via a commissioning interface of the system and/or of the building infrastructure system, if said probability exceeds a certain threshold.

13. The system (10) according to any of the claims 1 to 12,
wherein the building infrastructure system (20) comprises at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

14. The system (10) according to any of the claims 1 to 13,
wherein the artificial intelligence model comprises or is a machine-learned model or a model based on a neural network, especially based on an artificial neural network.

15. Method for commissioning a building infrastructure system, comprising the steps of:
inputting (101) information and/or commissioning-associated data with respect to the building infrastructure system,
providing (102) commissioning parameters for the building infrastructure system, and
applying (103) an artificial intelligence or pre-programmed model to the correspondingly inputted information and/or commissioning-associated data to generate said commissioning parameters.

## Amended claims

### Amended claims in accordance with Rule 137(2) EPC.

1. System (10) for commissioning a building infrastructure system (20), comprising:
an input interface (11) for inputting information and/or commissioning-associated data with respect to the building infrastructure system (20), and
a processing device (12) configured to generate commissioning parameters for the building infrastructure system (20),
wherein the processing device (12) is further configured to apply an artificial intelligence or pre-programmed model to the correspondingly inputted information and/or commissioning-associated data to generate said commissioning parameters,
wherein the system (10) further comprises an output interface for outputting interaction-associated information, especially in the context of commissioning the building infrastructure system (20),
wherein the input interface (11) and the output interface comprises or is a chatbot, preferably a chatbot using artificial intelligence and/or machine-learning or a rule-based chatbot.

2. The system (10) according to claim 1,
wherein the building infrastructure system (20) comprises or is a building infrastructure management system, or
wherein the building infrastructure system (20) comprises or is a lighting system, especially a lighting management system.

3. The system (10) according to any of the claims 1 to 2,
wherein the model is trained based on the correspondingly inputted information and/or commissioning-associated data.

4. The system (10) according to any of the claims 1 to 3,
wherein the model is trained based on further information and/or commissioning-associated data with respect to another building infrastructure system.

5. The system (10) according to any of the claims 1 to 4,
wherein the model is trained based on artificially generated information and/or commissioning-associated data, especially wherein said generated information and/or commissioning-associated data is generated with the aid of artificial intelligence, and/or
wherein the model is trained with the aid of artificial intelligence.

6. The system (10) according to any of the claims 1 to 7,
wherein the information and/or commissioning-associated data with respect to the building infrastructure system (20) comprises unchangeable parameters and/or changeable parameters with respect to the building infrastructure system (20) and/or with respect to the corresponding building of the building infrastructure system (20).

7. The system (10) according to claim 6,
wherein the unchangeable parameters with respect to the building infrastructure system (20) and/or with respect to the corresponding building of the building infrastructure system (20) comprise at least one of geographical location, climate and/or weather conditions, ground conditions, parameters regarding foundation and/or load-bearing structure, height, floor area, parameters regarding connection to infrastructure, parameters regarding energy supply systems, parameters regarding building regulations, parameters regarding zoning specifications, orientation, or any combination thereof.

8. The system (10) according to claim 6 or 7,
wherein the changeable parameters with respect to the building infrastructure system (20) and/or with respect to the corresponding building of the building infrastructure system (20) comprise at least one of parameters regarding room layout, parameters regarding furnishing, parameters regarding flooring and/or surfaces, planned building usage, expected number of people in a room and/or in an area, parameters regarding heating and/or ventilation and/or air conditioning systems, parameters regarding lighting, parameters regarding control systems, parameters regarding sun shading systems, parameters regarding energy management, parameters regarding parking lots, parameters regarding alarm systems, parameters regarding fire protection systems, parameters regarding communication systems, or any combination thereof.

9. The system (10) according to any of the claims 1 to 8,
wherein the processing device (12) is further configured to determine a probability of a corresponding correctness of the correspondingly provided commissioning parameters, and wherein the processing device (12) is further configured to apply said commissioning parameters to the building infrastructure system (20), especially via a commissioning interface of the system and/or of the building infrastructure system, if said probability exceeds a certain threshold.

10. The system (10) according to any of the claims 1 to 9,
wherein the building infrastructure system (20) comprises at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

11. The system (10) according to any of the claims 1 to 10,
wherein the artificial intelligence model comprises or is a machine-learned model or a model based on a neural network, especially based on an artificial neural network.

12. Method for commissioning a building infrastructure system, comprising the steps of:
inputting (101) information and/or commissioning-associated data, by an input interface (11), with respect to the building infrastructure system,
providing (102) commissioning parameters, by a processing device (12), for the building infrastructure system, and
applying (103) an artificial intelligence or pre-programmed model, by the processing device (12), to the correspondingly inputted information and/or commissioning-associated data to generate said commissioning parameters,
outputting interaction-associated information, by an output interface, especially in the context of commissioning the building infrastructure system (20),
wherein the input interface (11) and the output interface comprises or is a chatbot, preferably a chatbot using artificial intelligence and/or machine-learning or a rule-based chatbot.
